# EUROPÄISCHE PATENTSCHRIFT

(11) **EP 2 251 126 B1**
(45) Veröffentlichungstag und Bekanntmachung des Hinweises auf die Patenterteilung: **11.07.2012**
(21) Anmeldenummer: 10162917.8
(22) Anmeldetag: 17.05.2010
(51) Int. Cl.: B23D 47/02

(54) **Querschlitten mit motorisch verfahrbaren Anschlagklappen für Formatkreissägen**
Transverse slide with motor driven stop plates for circular table-saws
Coulisseau transversal doté de plaques de butée déplaçables et motorisées pour scies circulaires à banc

(30) Priorität: 15.05.2009 DE 202009007058 U
(43) Veröffentlichungstag der Anmeldung: 17.11.2010
(73) Patentinhaber: Wilhelm Altendorf GmbH & Co. KG, 32429 Minden (DE)
(72) Erfinder: Altendorf, Wilfried, 32429, Minden (DE)
(74) Vertreter: Eisenführ, Speiser & Partner

(56) Entgegenhaltungen:
- EP-A1- 1 837 110
- WO-A1-98/52727
- WO-A1-2004/045814
- US-A1- 2006 266 181

## Beschreibung

Die Erfindung betrifft einen Querschlitten für eine Formatkreissäge, umfassend eine sich in einer Verfahrrichtung erstreckende Anschlagschiene, entlang welcher zumindest eine Anschlagklappe mit einer senkrecht zur Verfahrrichtung liegenden Anschlagklappenfläche motorisch verfahrbar ist, einen Querschlittenrahmen, oberhalb dessen die Anschlagschiene befestigt ist, der eine Auflagefläche definiert die zumindest eine Querschlittenstrebe aufweist, die schräg oder senkrecht zur Verfahrbewegung der Anschlagklappe verläuft. Ein derartiger Querschlitten wird in der EP 1 837 110 A1 offenbart.

Querschlitten der zuvor genannten Bauart werden typischerweise verschiebbar an einem Rollwagen befestigt, der mittels einer leichtgängigen Linearlagerung entlang eines ortsfest gelagerten Kreissägeblattes geführt werden kann, um einen Kreissägeschnitt an einem Werkstück auszuführen, das auf dem Rollwagen und dem Querschlitten aufgelegt ist. Ein Querschlitten dient dazu, um größere Werkstücke seitlich zu unterstützen, wenn der Schnitt ausgeführt wird. Am Querschlitten ist weiterhin eine Anschlagschiene befestigt, welche senkrecht zum Verfahrweg des Rollwagens liegt und als Anlagefläche für ein Werkstück dienen kann, wenn ein senkrechter Schnitt zu einer Kante des Werkstücks durchgeführt werden soll.

Um ein definiertes Sollmaß für diesen Schnitt einzustellen, ist es bekannt, an der Anschlagschiene eine verschiebliche Anschlagklappe anzuordnen, welche als seitlicher Anschlag für das Werkstück dient und auf das gewünschte Maß verschoben werden kann. In bestimmten Ausgestaltungen kann die Anschlagschiene auch in einem anderen Winkel als 90° zur Verfahrrichtung des Rollwagens angeordnet und fixiert werden, um Gehrungsschnitte an einem Werksstück In definiertem Winkel durchzuführen. Desweiteren ist es in bestimmten Anwendungen vorteilhaft, wenn die Anschlagschiene in Verfahrrichtung des Rollwagens vor oder hinter der Auflagefläche des Querschlittens befestigt werden kann, um das Werkstück entsprechend beim Schnitt mit der Anschlagschiene zu schieben oder gegen die Anschlagschiene zu drücken, wenn der Sägeschnitt ausgeführt wird.

Für eine effiziente und maßgenaue Arbeitsweise mit Formatkreissägen ist es oftmals vorteilhaft, wenn eine oder zwei Anschlagklappen vorgesehen sind und diese motorische entlang der Anschlagschiene auf das gewünschte Maß verfahren werden können. Dies ermöglicht einerseits, das digitale Einstellen eines gewünschten Sollmaßes an einer entsprechenden Bedieneinheit und das hierauf folgende automatische Anfahren des solcher Art eingestellten Maßes durch die Anschlagklappe. Andererseits kann hierdurch ein teilautomatisierter Ablauf des Sägevorgangs erfolgen, wenn aus einer Arbeitsvorbereitung ermittelte Schnittdaten an die Steuerungseinheit der Formatkreissäge übertragen werden und die Anschlagklappen gemäß der so vorgegebenen Sollmaße verfahren werden können.

Ein Problem besteht hierbei darin, dass die Anschlagklappe bei dem Verfahren typischerweise einen Bereich oberhalb eines Querschlittenrahmens überstreicht, in dem eine oder mehrere Querschlittenstreben verlaufen und hierdurch die Gefahr besteht, dass die Hand oder einzelne Finger eines Bedieners durch die Verfahrbewegung zwischen Anschlagklappe und einer solchen Querschlittenstrebe eingeklemmt; gequetscht und abgeschert werden können.

Um diesem vorzubeugen, ist es bekannt, den Verfahrvorgang der Anschlagklappe nur in einem sogenannten "hold to run"-Betrieb zu ermöglichen, bei dem der Bediener eine von dem Gefahrenbereich soweit beabstandete Taste gedrückt halten muss, dass er die andere Hand nicht versehentlich im Gefahrenbereich platzieren kann. Zwar wird mit diesem Funktionsprinzip eine sichere Arbeitsweise erreicht, allerdings die Arbeitseffizienz beeinträchtigt, da der Bediener während des gesamten Verfahrvorgangs der Anschlagklappe den Betätigungstaster gedrückt halten muss.

Es ist daher Aufgabe der Erfindung, einen Querschlitten mit motorisch verfahrbarer Anschlagklappe bereitzustellen, mit dem eine höhere Arbeitseffizienz erzielt wird als mit bekannten Lösungen.

Diese Aufgabe wird erfindungsgemäß gelöst durch einen Querschlitten mit den Merkmalen des Anspruchs 1, und zwar durch einen Sicherheitsrahmen, der auf dem Querschlittenrahmen angeordnet ist und der zumindest in dem von der Anschlagklappe entlang ihres Verfahrwegs oberhalb von der Querschlittenstrebe liegenden Bereich eine Sperrfläche aufweist, welche verhindert, dass ein Benutzer durch diesen Bereich hindurchgreift.

Mit dem Querschlitten gemäß der Erfindung wird von dem "hold to run"-Betrieb abgegangen und eine höhere Arbeitseffizienz mit Formatkreissägen erzielt, indem die automatische Verfahrbarkeit der Anschlagklappen auch nach einmaliger Auslösung der Verfahrbewegung ohne weiteres Drücken der Taste erfolgen kann. Die Arbeitssicherheit wird hierbei dadurch erzielt, dass ein Sicherheitsrahmen auf dem Querschlittenrahmen angeordnet wird, der Sperrflächen aufweist, die solche Bereiche gegen Hindurchgreifen sichern, an denen Querschlittenstreben sich befinden und mögliche Klemm-, Quetsch- oder Scherstellen mit der Anschlagklappe ausbilden könnten. Der Erfindung liegt dabei die Erkenntnis zugrunde, dass durch die Bereitstellung eines solchen Sicherheitsrahmens eine besonders sichere und zugleich konstruktiv einfach zu realisierende Lösung der sicherheitstechnischen Aspekte erzielt werden kann, ohne dass hierdurch der Arbeitsablauf erschwert wird und ohne dass hierdurch die Bedienung oder die Fertigung der Formatkreissäge bzw. des Querschlittens aufwendiger wird. Dabei geht die Erfindung von anderen Lösungsmöglichkeiten ab, die beispielsweise in einer automatischen Anhebung der Anschlagklappen im Bereich solcher Scher- oder Quetschbereiche liegen können, die entsprechende Freiflächen mit Spaltbreiten größer 25mm an solchen Scher- oder Quetschstellen vorsehen könnten oder durch angeschrägte Anlaufflächen an den Anschlagklappen ein automatisches Anheben der Anschlagklappen im Falle einer Klemmung oder Quetschung bewirken könnten, um solcher Art einer größeren Krafteinwirkung auf die Hand des Benutzers und einer daraus resultierenden Verletzung oder Scherung vorzubeugen. Der erfindungsgemäße Sicherheitsrahmen weist dabei den weiteren Vorteil auf, dass auch bei einer Bedienung des Querschlittens durch zwei Personen eine höhere Betriebssicherheit erzielt wird, als dies mit einer "hold to run"-Bedienung der Anschlagklappen erzielt werden kann, da durch den Sicherheitsrahmen auch der zweite Bediener, welcher nicht die Taste betätigt, vor Verletzungen geschützt wird.

Grundsätzlich ist zu verstehen, dass die Sperrfläche sich entlang des gesamten Verfahrbereichs der Anschlagklappe deshalb des Querschlittenrahmens befinden kann, um solcher Art ein grundsätzliches Hindurchgreifen des Bedieners in den Bereich unterhalb dieses Verfahrwegs zu verhindern. Dies ist insbesondere bevorzugt, da hierdurch auch eine durch die Begrenzung der Sperrfläche auftretende Klemm- oder Quetschstelle vermieden werden kann, die andernfalls durch entsprechende Abschrägung der Sperrfläche nur in gewisser Weise vermieden werden könnte. Der Sicherheitsrahmen kann insbesondere solcher Art ausgestalten sein, dass er auf den die Auflagefläche definierenden Rahmenelementen des Querschlittenrahmens aufliegt und dann seinerseits die Auflagefläche für das Werkstück teilweise oder vollständig bildet. So ist es insbesondere bevorzugt, dass der Sicherheitsrahmen solcher Art ausgebildet ist, dass die Streben oder Profile, welche den Sicherheitsrahmen ausbilden, auf ihrer Oberseite solcher Art eine plane und definierte Auflagefläche bilden, dass eine Werkstückauflage für einen präzisen Schnitt auf dem Sicherheitsrahmen erzielt wird, wenn dieser auf dem Querschlitten platziert ist.

Gemäß einer ersten bevorzugten Ausführungsform ist vorgesehen, dass der Sicherheitsrahmen lösbar mit dem Querschlitten verbindbar ist, insbesondere durch Auflegen des Sicherheitsrahmens in einer vertikalen Richtung auf den Querschlittenrahmen und formschlüssiges Sichern gegen eine horizontale Bewegung des Sicherheitsrahmens in Bezug auf den Querschlittenrahmen. Mit dieser Ausgestaltung wird eine einerseits leichte Montage des Sicherheitsrahmens an dem Querschlitten erzielt und andererseits eine sichere Befestigung des Sicherheitsrahmens gegen unerwünschtes horizontales Verschieben in Bezug auf den Querschlittenrahmen erreicht. Dabei ist zu verstehen, dass die formschlüssige Sicherung gegen zumindest eine horizontale Bewegungsrichtung, vorzugsweise gegen alle horizontalen Bewegungsrichtungen erfolgen soll.

Weiterhin ist bevorzugt vorgesehen, dass bei einem Querschlitten, bei dem die Anschlagschiene lösbar mit dem Querschlittenrahmen verbindbar sind und die Anschlagschiene in einer ersten Position am Querschlittenrahmen befestigbar ist, in welcher eine vordere Anschlagschienenfläche zu der Auflagefläche weist und als Anlagefläche für ein Werkstück dient, und in einer zweiten Position am Querschlittenrahmen befestigbar ist, in welcher eine hintere Anschlagschienenfläche zu der Auflagefläche weist und als Anlagefläche für ein Werkstück dient der Sicherheitsrahmen solcher Art lösbar mit dem Querschlittenrahmen verbindbar ist, dass er in einer ersten Position am Querschlittenrahmen befestigbar ist, in welcher die Sperrfläche im Bereich vor der vorderen Anschlagschienenfläche angeordnet ist und verhindert, dass ein Benutzer durch diesen Bereich hindurchgreift, und in einer zweiten Position am Querschlittenrahmen befestigbar ist, in welcher die Sperrfläche im Bereich hinter der hinteren Anschlagschienenfläche angeordnet ist, und verhindert, dass ein Benutzer durch diesen Bereich hindurchgreift.

Diese spezifische Ausbildung löst die Problematik der Klemm- Scher- und Quetschstellen auch bei Querschlitten, die mit einer Anschlagschiene versehen sind, die als vordere oder hintere Anschlagschiene an dem Querschlitten befestigt werden kann, wie eingangs erläutert. Für solche Arten von Querschlitten kann der erfindungsgemäße Sicherheitsrahmen je nach Positionierung der Anschlagschiene entsprechend aus einer ersten in eine zweite Stellung umgesetzt werden, um jeweils den Gefahrenbereich gegen unbeabsichtigtes Hindurchgreifen zu sperren. Dabei ist zu verstehen, dass der Sicherheitsrahmen vorzugsweise gemäß der zuvor erläuterten Lösung in beiden Positionen eine formschlüssige Sicherung gegen horizontales Verschieben am Querschlittenrahmen erzielt.

Weiterhin ist es bevorzugt, dass der Sicherheitsrahnmen eine Längstrebe aufweist, welche die Sicherheitsfläche umfasst, und zumindest eine hierzu schräg oder senkrecht stehende Querstrebe, welche in zumindest einer horizontalen Richtung formschlüssig an der Querschlittenstrebe des Querschlittenrahmens befestigt ist.

Diese bevorzugte Ausführungsform ermöglicht eine einerseits sichere Befestigung des Sicherheitsrahmens an dem Querschlitten und andererseits einfache Montage. Hierbei ist zu verstehen, dass die Querstrebe des Sicherheitsrahmens insbesondere in einem solchen Winkel zur Längsstrebe des Sicherheitsrahmens ausgerichtet ist, welcher dem Winkel entspricht, indem die Querschlittenstrebe zu der Anschlagschiene des Querschlittens steht, um auf diese Weise den Sicherheitsrahmen mit der Querstrebe formschlüssig an der Querschlittenstrebe befestigen zu können.

Dabei ist es noch weiter bevorzugt, wenn die Querstrebe als U-Profil ausgebildet ist, dessen Schenkel in Betriebsstellung nach unten weisen und eine Querschlittenstrebe des Querschlittenrahmens beidseits umgreifen. Mittels einer solchen Ausgestaltung wird einerseits eine beidseits wirkende formschlüssige Verriegelung erzielt, indem die Querschlittenstrebe im Inneren des U-Profils zu liegen kommt, wenn der Sicherheitsrahmen auf dem Querschlitten aufgelegt ist. Andererseits wird durch das U-Profil eine definierte obere Auflagefläche am Sicherheitsrahmen für das Werkstück ausgebildet und zugleich eine hohe Steifigkeit gegen Verwindung des Sicherheitsrahmens erzielt. Dabei ist zu verstehen, dass die Querstrebe solcher Art ausgebildet ist, dass sie vorzugsweise durchgehend in ihrem U-Profil die Aufnahme der Querschlittenstrebe ermöglicht, auch in Ausgestaltungen, in denen die Längsstrebe des Sicherheitsrahmens nicht an einem Ende mit der Querstrebe verbunden ist, sondern sich die Querstrebe mit einem kurzen und einem langen Abschnitt beidseits der Längsstrebe erstreckt oder ihrer Länge nach genau mittig von der Längsstrebe gekreuzt wird.

Weiterhin ist es bei Querschlitten, deren Anschlagsschiene aus einer vorderen in eine hintere Position und umgekehrt umgesetzt werden kann, bevorzugt, wenn die Querstrebe sowohl in der ersten als auch in der zweiten Stellungen des Sicherheitsrahmens in zumindest einer horizontalen Richtung formschlüssig an der Querschlittenstrebe des Querschlittenrahmens befestigt ist. Hierdurch wird, vorzugsweise durch übereinstimmende Formschlussflächen in beiden Stellungen eine horizontale Verschiebung in einer, vorzugsweise allen Richtungen durch eine sichere Verankerung des Sicherheitsrahmens auf dem Querschlitten verhindert.

Gemäß einer noch weiteren bevorzugten Ausführungsform ist die Querstrebe als U-Profil ausgebildet, dessen Schenkel in Betriebsstellung nach unten weisen und an ihrem Ende eine jeweils zum anderen Schenkel weisende Leiste aufweisen, welche so ausgebildet ist, dass sie die Querschlittenstrebe an ihrer Unterseite teilweise umgreift. Die solcher Art ausgebildete Leiste kann kürzer oder länger sein, insbesondere ist aber bevorzugt, dass zwischen den beiden Leisten eine solche Ausnehmung verbleibt, die es ermöglicht, dass die Querschlittenstrebe durch diese Ausnehmung zwischen den Leisten hindurch in das Innere des U-Profils eingesetzt werden kann, ohne dass hierzu eine Verformung des U-Profils erforderlich wäre. Das U-Profil kann in diesem Fall beispielsweise aus einem Rechteckrohr ausgebildet sein, welches an einer Seite eine Ausnehmung aufweist, die zwar über die gesamte Länge, aber nicht über die gesamte Breite des Rechteckrohrs reicht und somit einen Teil der Seite beidseits stehen lässt, der dann die Leisten darstellt. Mit dieser Ausgestaltung wird, wenn der Sicherheitsrahmen nach Aufsetzen auf den Querschlitten nur geringfügig seitlich verschoben wird, ein Hintergreifen der Leisten unter die Querschlittenstreben erzielt, welches ein unbeabsichtigtes Abheben des Sicherheitsrahmens nach oben vom Querschlittenrahmen durch Formschluss verhindern kann.

Noch weiter ist es bevorzugt, dass zwischen den jeweils zum anderen Schenkel weisenden Leisten ein offener Bereich vorhanden ist, dessen lichtes Maß zwischen den beiden Leisten der Breite der Querschlittenstrebe entspricht. Bei dieser Ausgestaltung kann der Sicherheitsrahmen in einfacher Weise auf den Querschlitten aufgesetzt werden und hierbei ein Umgreifen der Querschlittenstreben durch die spezifisch ausgebildeten Schenkel mit U-Profil und darin ausgebildeten Leisten erreicht werden.

Gemäß einer weiteren bevorzugten Ausführungsform ist vorgesehen, dass der Sicherheitsrahmen eine Längstrebe aufweist, welche die Sicherheitsfläche umfasst, und zwei hierzu schräg oder senkrecht stehenden Querstreben, von denen zumindest eine, vorzugsweise beide in zumindest einer horizontalen Richtung formschlüssig an jeweils einer Querschlittenstrebe des Querschlittenrahmens befestigt ist. Mit dieser Ausgestaltung wird einerseits eine stabile formschlüssige Befestigung des Sicherheitsrahmens am Querschlitten erreicht, wobei insbesondere ermöglicht wird, dass die Formschlusswirkung gegen horizontales Verschieben an den beiden Querstreben in unterschiedlicher Richtung erfolgt. Weiterhin wird eine auch für sehr große Werkstücke ausreichende Auflagefläche oberhalb des Sicherheitsrahmens bereitgestellt, indem die Werkstücke auf beiden Querstreben und der Längsstrebe bzw. Sperrfläche aufliegen können.

Schließlich kann der erfindungsgemäße Querschlitten weiter fortgebildet werden durch einen Sensor, insbesondere einen mechanischen Taster, der das Vorhandensein der Sperrfläche in der richtigen Montageposition erfasst und der eine Schnittstelle zur Übermittlung der Sensordaten an eine Maschinensteuerung der Formatkreissäge aufweist. Mit dieser Ausgestaltung wird es ermöglicht, die Bedienungssicherheit der Maschine weiter zu erhöhen, indem die korrekte Positionierung der Sperrfläche durch einen Sensor erfasst wird und dieses Sensorsignal an eine Maschinensteuerung weitergeleitet werden kann. Die Maschinensteuerung der Formatkreissäge kann in diesem Fall solcher Art ausgebildet sind, dass sie eine Verfahrbewegung der Anschlagklappen nur dann zulässt, wenn der Sensor die korrekte Positionierung der Sperrfläche signalisiert.

Insbesondere ist es dabei bevorzugt, wenn eine Maschinensteuerung vorgesehen ist, die mit dem Sensor und einer Benutzerschnittstelle gekoppelt ist, die Bewegung der Anschlagklappen steuert und die solcherart ausgebildet ist, dass die Anschlagklappen nur durch eine andauernde manuelle Betätigung bewegt werden können, wenn der Sensor das Vorhandensein der Sperrfläche nicht oder in einer falschen Montageposition detektiert. Mit dieser Fortbildung wird erreicht, dass dann, wenn der Sensor die korrekte Positionierung der Sperrfläche nicht signalisiert, ein Verfahren der Anschlagklappen nur im hold to run-Betrieb möglich ist.

Ein weiterer Aspekt ist die Verwendung eines Sicherheitsrahmens für einen Querschlitten einer Formatkreissäge mit den Merkmalen des Anspruchs 14, der Querschlitten umfassend: eine sich in einer Verfahrrichtung erstreckende Anschlagschiene, entlang welcher zumindest eine Anschlagklappe mit einer senkrecht zur Verfahrrichtung liegenden Anschlagklappenfläche motorisch verfahrbar ist, einen Querschlittenrahmen, oberhalb dessen die Anschlagschiene befestigt ist, der eine Auflagefläche definiert die zumindest eine Querschlittenstrebe aufweist, die schräg oder senkrecht zur Verfahrbewegung der Anschlagklappe verläuft, welcher dadurch fortgebildet ist, dass der Sicherheitsrahmen mit dem Querschlitten durch Auflegen des Sicherheitsrahmens in einer vertikalen Richtung auf den Querschlittenrahmen und formschlüssiges Sichern gegen eine horizontale Bewegung des Sicherheitsrahmens in Bezug auf den Querschlittenrahmen verbindbar ist und der Sicherheitsrahmen in montierter Position zumindest in dem von der Anschlagklappe entlang ihres Verfahrwegs oberhalb von der Querschlittenstrebe liegenden Bereich eine Sperrfläche aufweist, welche verhindert, dass ein Benutzer durch diesen Bereich hindurchgreift.

Mit diesem Aspekt der Erfindung wird die Verwendung eines Sicherheitsrahmens bereitgestellt, der in spezifischer Weise auf einen Querschlitten aufgelegt werden kann und sich als Nachrüstlösung für bestehende Querschlitten an Formatkreissägen eignet, um bei diesen Formatkreissägen eine höhere Arbeitseffizienz zu erzielen und andere Sicherheitsmaßnahmen zu erübrigen.

Der Sicherheitsrahmen kann insbesondere fortgebildet werden nach den zuvor beschriebenen Fortbildungsaspekten des erfindungsgemäßen Querschlittens, soweit diese Aspekte des Sicherheitsrahmens betreffen.

Schließlich kann der erfindungsgemäße Sicherheitsrahmen insbesondere solcher Art ausgebildet sein, dass der Sicherheitsrahmen eine Längstrebe aufweist, welche die Sicherheitsfläche umfasst, und zwei hierzu senkrecht stehende Querstreben, welche jeweils als U-Profil ausgebildet sind, dessen Schenkel in Betriebsstellung nach unten weisen und an ihrem Ende eine jeweils zum anderen Schenkel weisende Leiste aufweisen, die so ausgebildet ist, dass sie jeweils eine Querschlittenstrebe an ihrer Unterseite teilweise umgreift, wobei sich die Querstreben zu beiden Seiten der Längsstrebe erstrecken und vorzugsweise der Verbindungspunkt zwischen den Querstreben und der Längsstrebe solcherart liegt, dass die Oberseite der Längsstrebe im Bereich des Verfahrwegs einer Längsanschlagklappe liegt, wenn der Sicherheitsrahmen auf dem Querschlitten angeordnet ist.

Mit dieser Fortbildung wird eine Ausführung des Sicherheitsrahmens erreicht, die einerseits leicht montierbar, andererseits in stabiler Weise am Querschlitten befestigt werden kann und hierbei insbesondere eine leichte Lösbarkeit in der vertikalen Richtung nach oben und eine hohe Verschiebesicherheit in den horizontalen Richtungen aufweist.

Eine bevorzugte Ausführungsform wird anhand der Figuren erläutert. Es zeigen:
Fig. 1 eine perspektivische Ansicht von schräg vorne oben einer Formatkreissäge mit angesetztem Querschlitten und daran montierter Anschlagschiene in einer Positionierung hinter der Werkstückauflagefläche des Querschlittens,
Fig. 2 eine Ansicht gemäß Figur 1 mit einer Positionierung der Anschlagschiene vor der Auflagefläche des Querschlittens,
Fig. 3 eine perspektivische Ansicht des erfindungsgemäßen Sicherheitsrahmen,
Fig. 4 eine perspektivische Ansicht der Formatkreissäge gemäß Figur 1 von schräg unten und
Fig. 5 einen Ausschnitt aus Figur 4 gemäß dem mit B gekennzeichneten Kreisausschnitt.

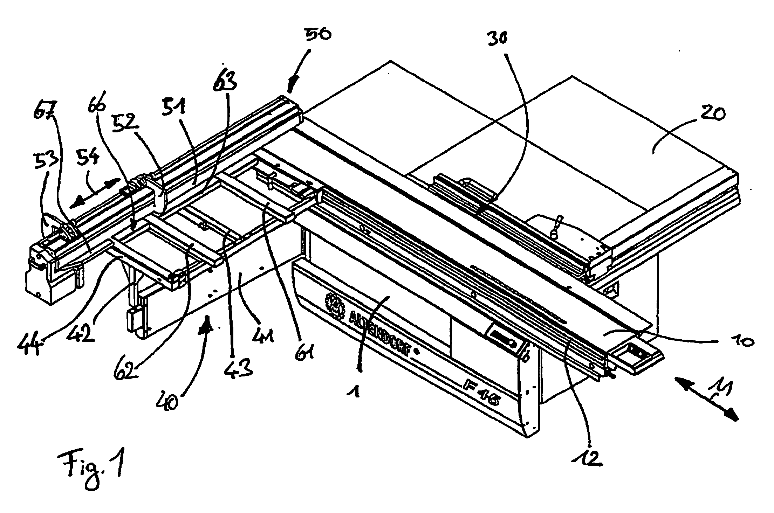

Bezugnehmend auf Figur 1 ist ein grundsätzlicher Aufbau einer Formatkreissäge dargestellt. Die Formatkreissäge weist einen Rollwagen 10 auf, der in einer mit 11 gekennzeichneten Richtung verschieblich gelagert ist. Der Rollwagen kann mitsamt eines darauf aufgelegten Werkstücks an einem von unten durch einen Auflagetisch 20 hindurch ragenden Kreissägeblatt (nicht dargestellt), welches durch einen Werkzeugschlitz 30 hindurchragt, entlanggeführt werden und hierdurch ein Schnitt an dem Werkstück ausgeführt werden.

Am Rollwagen 10 ist ein Querschlitten 40 befestigt, der mitsamt dem Rollwagen 10 verschoben werden kann und wiederum seinerseits entlang einer Befestigungsschiene 12 am Rollwagen verschoben werden kann. Der Querschlitten stützt sich über einen Teleskoparm 41 am Maschinengrundgestell 1 der Formatkreissäge mit seinem außenliegenden Ende 42 ab.

Der Querschlitten definiert eine Auflagefläche, die fluchtend zu der Auflagefläche des Rollwagens 10 ist und die als eine vom Kreissägeblatt wegweisende, ausladende Fläche ein Werkstücks beim Sägeschnitt abstützen kann.

Oberhalb der Auflagefläche des Querschlittens ist eine Anschlagschiene 50 befestigt. Die Anschlagschiene weist eine vordere Anlagefläche 51 auf, an der ein Werkstück in der in Fig. 1 dargestellten Positionierung angelegt werden kann, um es in seiner Winkelausrichtung in Bezug auf die Fahrbewegung des Rollwagens 11 und folglich in Bezug auf die Sägeschnittrichtung definiert festlegen zu können.

An der Anschlagschiene sind weiterhin zwei Anschlagklappen 52, 53 angeordnet, die motorisch entlang der Anschlagschiene in einer Richtung 54 verfahren werden können.

Wie aus Fig. 1 ersichtlich, weist der Querschlitten eine Mehrzahl von Querschlittenstreben 43, 44 auf, die senkrecht zur Verfahrbewegung 54 der Anschlagklappen ausgerichtet sind und folglich Scher- Klemm- bzw. Quetschstellen bei der Ausführung einer solchen Verfahrbewegung der Anschlagklappe mit der Anschlagklappe bilden.

Ein Sicherheitsrahmen, der aus zwei Querstreben 61, 62 und einer Längsstrebe 63 besteht, ist auf dem Querschlitten aufgelegt. Die Längsstrebe 63 kommt hierbei so zu liegen, dass ihre obere Fläche genau unterhalb des Verfahrbereichs der Anschlagklappe 52 vor der vorderen Anlagefläche 51 der Anschlagschiene zu liegen kommt und solcher Art eine Sperrfläche ausbildet. Die Sperrfläche verhindert somit, dass ein Bediener seine Hand in den Bereich einer Querschlittenstrebe 43, 44 unterhalb des Verfahrbereichs einbringt und hierdurch der Gefahr einer Klemmung, Scherung oder Quetschung aussetzt, wenn die Anschlagklappe über diese Querschlittenstrebe hinweg gefahren wird.

Die beiden Querstreben 61, 63, 62 sind solcher Art angeordnet, dass sie die Querschlittenstreben 45, 46 umgreifen, indem die Querstreben als U-Profile ausgeführt sind und die Querschlittenstreben von unten in den Innenraum des U-Profils eingeführt werden können.

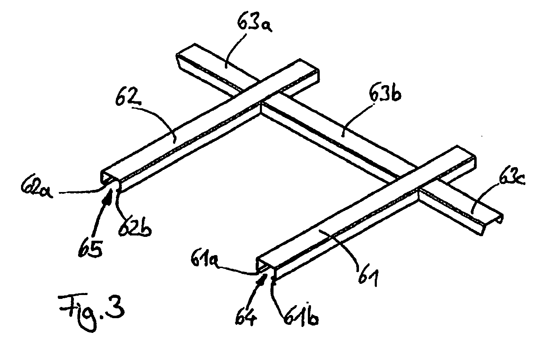

Wie aus Figur 1 in Abgleich zu Figur 3 zu erkennen ist, erstreckt sich die Längsstrebe 63 des Sicherheitsrahmens entlang des Verfahrbereichs der Anschlagklappe 52 oberhalb des Querschlittenrahmens 40. Die Längsstrebe 63 definiert hierdurch eine Sperrfläche 66, die ein unbeabsichtigtes Hindurchgreifen in diesem Bereich verhindert. Die Anschlagschiene erstreckt sich nach außen über den Querschlitten 40 hinaus. Während auf der maschinenseitigen Seite die Anschlagschiene oberhalb des Rollwagens mit seiner Auflagefläche zu liegen kommt und hierdurch keine Gefahr von Quetsch- oder Scherstellen entsteht, ist am außen liegenden Ende der Anschlagschiene eine Sperrfläche 67 befestigt, die fluchtend zu der Sperrfläche 66 liegt. Die Sperrfläche 67 deckt den Bereich unterhalb des Verfahrweges der Anschlagklappe 52 ab, der nicht im Bereich des Querschlittens 40 liegt. Die außen liegende Sperrfläche 67 ist an ihrem äußeren Ende abgeschrägt, so dass hier eine Scherung oder Quetschung einer Hand oder eines Fingers verhindert wird, indem die Hand bzw. der Finger durch die Anschlagklappe aus dem Gefahrenbereich geschoben wird, wenn die Anschlagklappe über diesen abgeschrägten Bereich hinwegfährt.

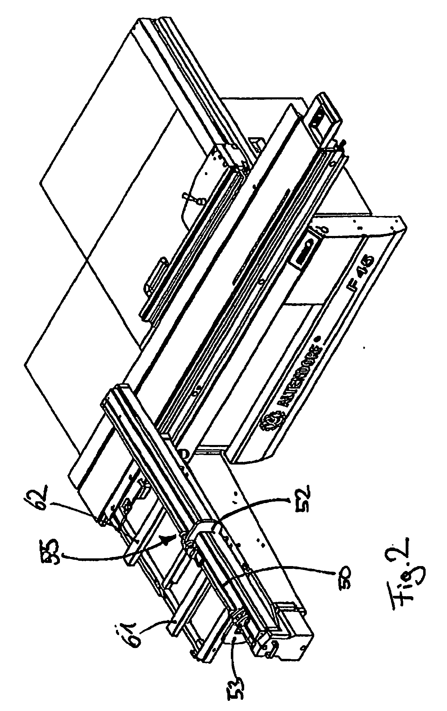

Figur 2 zeigt eine zweite Positionierung der Anschlagschiene an den Querschlitten. Während bei der in Figur 1 gezeigten Stellung das Werkstück solcher Art auf den Querschlitten aufgelegt und an die Anschlagschiene heran geschoben wird, dass es die Anschlagschiene in der Verschieberichtung des Rollwagens beim Schnitt vor der Auflagefläche des Querschlittens und folglich vor dem Werkstück liegt, ist die Anschlagschiene bei der Positionierung in Figur 2 hinter der Auflagefläche und dem darauf aufgelegten Werkstück angeordnet, wenn die Verfahrbewegung des Rollwagens zur Durchführung des Schnitts ausgeführt wird. Während die in Figur 1 gezeigte Stellung der Anschlagschiene für flächige Werkstücke bevorzugt wird, deren Schnittwiderstand ein gewisses Maß nicht übersteigt, wird die Anschlagschiene in die in Figur 2 gezeigte Position umgesetzt, um Werkstücke zu sägen, die eine erhebliche Schnittkraft aufweisen, um hierbei zu vermeiden, dass das Werkstück durch die Schnittkraft von der Anschlagschiene weggedrückt wird und hierdurch die Winkeltreue des Schnitts nicht mehr gewährleistet wäre.

Wie in Figur 2 zu erkennen, kann der Sicherheitsrahmen beim Umstellen der Anschlagschiene aus der in Figur 1 gezeigten Stellung abgehoben und in die in Figur 2 gezeigte Stellung umgesetzt werden, dass die Längsstrebe 63 wiederum unterhalb des Verfahrbereichs der Anschlagklappe, welche in diesem Fall die Anschlagklappe 53 ist, zu liegen kommt und hierdurch in entsprechend gleicher Weise die Gefahrstellen an Querschlittenstreben gegen unbeabsichtigte Klemmung, Scherung oder Quetschung sperrt.

Zu diesem Zweck kann der Sicherheitsrahmen nach oben abgenommen werden, um 180° um seine vertikale Achse gedreht werden und hiernach wieder auf den Querschlitten aufgesetzt werden. Auf diese Weise kommt die Längsstrebe 63 des Sicherheitsrahmens vor einer nun als Werksstückanlagefläche dienenden Anlage bekannte 55 der Anschlagschiene zu liegen und sperrt den Bereich vor dieser Anlagekante 55 und unterhalb des Verfahrbereichs der Anschlagklappe 53.

Figur 3 zeigt den Sicherheitsrahmen alleinstehend im Detail. Wie aus der Figur erkennbar ist, weist der Sicherheitsrahmen 2 als U-Profil ausgebildete und durchlaufende Querstreben 61, 62 auf, die parallel zueinander liegen und mit einer hierzu senkrecht stehenden Längsstrebe solcher Art verbunden sind, dass die Längsstreben die Querstreben zu jeweils etwa ein 1/4-3/4 unterteilt. Die Längsstrebe 63 wird hierzu aus drei Teilabschnitten 63a, 63b, 63c gebildet, die mit den Querstreben 61, 62 verschweißt sind.

Weiterhin ist ersichtlich, dass jede Querstrebe 61, 62 an den Enden ihrer U-Schenkel jeweils eine Leiste 61a,b, 62a,b, aufweist, die jeweils zum anderen Schenkel des Us weist. Zwischen den Leisten 61a,b, 62a,b bleibt ein Zwischenraum 64, 65, in den eine Querschlittenstrebe eingeführt werden kann, um im Innenraum des U-Profils zu liegen zu kommen. Wird der Sicherheitsrahmen auf diese Weise auf den Querschlitten aufgesetzt und hiernach horizontal leicht verschoben, so umgreifen die Leisten 61a,b, 62a,b die Querschlittenstrebe von unten und sichern den Sicherheitsrahmen gegen unbeabsichtigtes Abheben nach oben.

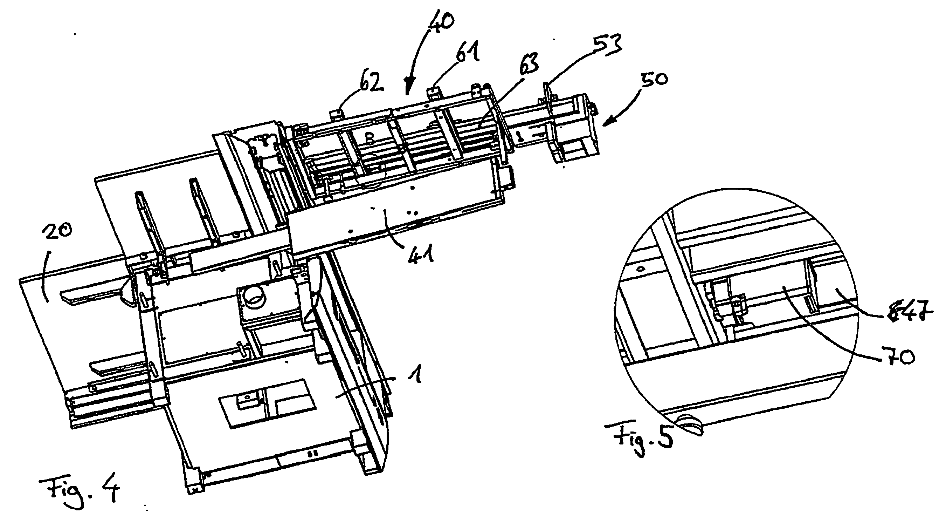

Figur 4 zeigt eine Formatkreissäge von unten mit aufgesetzten Sicherheitsrahmen. In dem in Figur 5 gezeigten Detail des Querschlittens ist ein mechanischer Taster 60 an einer Querschlittenlängsstrebe 47 befestigt. Der mechanische Taster 70 ist solcher Art ausgebildet, dass er die Sperrfläche der Längsstrebe 63 des Sicherheitsrahmens von unten ertastet, wenn der Sicherheitsrahmen ordnungsgemäß auf den Querschlitten aufgelegt ist. Über eine Datenschnittstelle (nicht abgebildet) sendet der mechanische Taster 70 in diesem Fall ein Signal an die Maschinensteuerung, welches die korrekte Auflage des Sicherheitsrahmens anzeigt. Die Maschinensteuerung gibt in diesem Fall die Verfahrbewegung der Anschlagklappen 52, 53 nicht möglich ist oder entlang der Anschlagschiene frei. Sofern der mechanische Taster 70 keine korrekte Auflage des Sicherheitsrahmens detektiert, kann die Maschinensteuerung solcher Art programmiert sein, dass ein Verfahren der Anschlagklappen 52, 53 nur möglich ist, wenn dieses im hold to run-Betrieb erfolgt oder nur möglich ist, wenn die Anschlagklappen hochgestellt sind, um solcher Art Scher-, Klemm- und Quetschstellen sicher zu vermeiden.

## Patentansprüche

1. Querschlitten für eine Formatkreissäge, umfassend
- eine sich in einer Verfahrrichtung erstreckende Anschlagschiene (50), entlang welcher zumindest eine Anschlagklappe (52, 53) mit einer senkrecht zur Verfahrrichtung liegenden Anschlagklappenfläche motorisch verfahrbar ist,
- einen Querschlittenrahmen (40), oberhalb dessen die Anschlagschiene befestigt ist, der eine Auflagefläche definiert die zumindest eine Gluerschlittenstrebe (43 44) aufweist, die schräg oder senkrecht zur Verfahrbewegung der Anschlagklappe verläuft,
**gekennzeichnet durch** einen Sicherheitsrahmen (61, 62, 63), der auf dem Querschüttenrahmen angeordnet ist und der zumindest in dem von der Anschlagklappe entlang ihres Verfahrwegs oberhalb von der Querschlittenstrebe liegenden Bereich eine Sperrfläche (63) aufweist, welche verhindert, dass ein Benutzer **durch** diesen Bereich hindurchgreift.

2. Querschlitten nach Anspruch 1,
**dadurch gekennzeichnet, dass** der Sicherheitsrahmen lösbar mit dem Querschlitten verbindbar ist, insbesondere durch Auflegen des Sicherheitsrahmens in einer vertikalen Richtung auf den Querschlittenrahmen und formschlüssiges Sichern gegen eine horizontale Bewegung des Sicherheitsrahmens in Bezug auf den Querschlittenrahmen.

3. Querschlitten nach Anspruch 1 oder 2,
bei dem die Anschlagschiene lösbar mit dem Querschliftenrahrnen verbindbar sind und die Anschlagschiene
- in einer ersten Position am Querschlittenrahmen befestigbar ist, in welcher eine vordere Anschlagschienenfläche zu der Auflagefläche weist und als Anlagefläche für ein Werkstück dient, und
- in einer zweiten Position am Querschlittenrahmen befestigbar ist, in welcher eine hintere Anschlagschienenfläche zu der Auflagefläche weist und als Anlagefläche für ein Werkstück dient
**dadurch gekennzeichnet, dass** der Sicherheltsrahmen lösbar mit dem Querschlittenrahmen verbindbar ist und
- in einer ersten Position am Querschlittenrahmen befestigbar ist, in welcher die Sperrfläche im Bereich vor der vorderen Anschlagschienenfläche angeordnet ist und verhindert, dass ein Benutzer durch diesen Bereich hindurchgreift, und
- in einer zweiten Position am Querschlittenrahmen befestigbar ist, in welcher die Sperrfläche im Bereich hinter der hinteren Anschlagschienenfläche angeordnet ist, und verhindert, dass ein Benutzer durch diesen Bereich hindurchgreift.

4. Querschlitten nach einem der vorhergehenden Ansprüche,
**dadurch gekennzeichnet, dass** der Sicherheitsrahnmen eine Längsstrebe aufweist, welche die Sicherheitsfläche umfasst, und zumindest eine hierzu schräg oder senkrecht stehende Querstrebe, welche in zumindest einer Horizontalen Richtung formschlüssig an jeweils einer Querschlittenstrebe des Querschlittenrahmens befestigt ist.

5. Querschlitten nach dem vorhergehenden Anspruch,
**dadurch gekennzeichnet, dass** die Querstrebe als U-Profil ausgebildet ist, dessen Schenkel In Betriebsstellung nach unten weisen und eine Querschlittenstrebe des Querschlittenrahmens beidseits umgreifen.

6. Querschlitten nach einem der beiden vorhergehenden Ansprüche und Anspruch 3,
**dadurch gekennzeichnet, dass** die Querstrebe sowohl in der ersten als auch in der zweiten Stellungen des Sicherheitsrahmens in zumindest einer horizontalen Richtung formschlüssig an der Querschlittenstrebe des Querschlittenrahmens befestigt ist.

7. Querschlitten nach einem der vorhergehenden Ansprüche,
**dadurch gekennzeichnet, dass** die Querstrebe als U-Profil ausgebildet ist, dessen Schenkel in Betriebsstellung nach unten welsen und an ihrem Ende eine jeweils zum anderen Schenkel weisende Leiste aufweisen, welche so ausgebildet ist, dass sie die Querschlittenstrebe an ihrer Unterseite teilweise umgreift.

8. Querschlitten nach dem vorhergehenden Anspruch,
**dadurch gekennzeichnet, dass** zwischen den jeweils zum anderen Schenkel weisenden Leisten ein offener Bereich vorhanden ist, dessen lichtes Maß zwischen den beiden Leisten der Breite der Querschlittenstrebe entspricht.

9. Querschlitten nach einem der vorhergehenden Ansprüche,
**dadurch gekennzeichnet, dass** der Sicherheitsrahmen eine Längsstrebe aufweist, welche die Sicherheitsfläche umfasst, und zwei hierzu schräg oder senkrecht stehenden Querstreben, von denen zumindest eine, vorzugsweise beide in zumindest einer horizontalen Richtung formschlüssig an der Querschlittenstrebe des Querschlittenrahmens befestigt ist.

10. Querschlitten nach einem der vorhergehenden Ansprüche,
**gekennzeichnet durch** einen Sensor, insbesondere einen mechanischen Taster, der das Vorhandensein der Sperrfläche in der richtigen Montageposition erfasst und der eine Schnittstelle zur Übermittlung der Sensordaten an eine Maschinensteuerung der Formatkreissäge aufweist.

11. Querschlitten nach dem vorhergehenden Anspruch,
**gekennzeichnet durch** eine Maschinensteuerung, die
- mit dem Sensor und einer Benutzerschnittstelle gekoppelt ist,
- die Bewegung der Anschlagklappen steuert und
- solcherart ausgebildet ist, dass die Anschlagklappen nur **durch** eine andauernde manuelle Betätigung bewegt werden können, wenn der Sensor das Vorhandensein der Sperrfläche nicht oder in einer falschen Montageposition detektiert.

12. Querschlitten nach einem der vorhergehenden Ansprüche,
**dadurch gekennzeichnet, dass** die Anschlagklappe solcherart bewegbar Ist, dass ihre untere Kante angehoben werden kann und weiter **gekennzeichnet durch** einen Aktuator, welcher die untere Kante der Anschlagklappe um ein definiertes Maß anheben kann und **durch** eine Anschlagklappensteuerung, welche den Aktuator solcherart ansteuert, dass vor einem Verfahren der Anschlagklappe entlang der Anschfagschiene die untere Kante der Anschlagklappe angehoben wird.

13. Querschlitten nach einem der vorhergehenden Ansprüche,
**dadurch** gekenntzeichnet dass die Anschlagklappe solcherart bewegbar ist, dass ihre untere Kante angehoben werden kann und dass die untere Kante der Anschlagklappen eine Anlaufschräge aufweist, welche eine Anhebung der unteren Kante der Anschlagklappe bewirkt, wenn diese gegen ein Hindernis Im Bereich der unteren Kante fährt.

14. Verwendung eines Sicherheitsrahmens für einen Querschlitten einer Formatkreissäge, der Querschlitten umfassend:
- eine sich in einer Verfahrrichtung erstreckende Anschlagschiene, entlang welcher zumindest eine Anschlagklappe mit einer senkrecht zur Verfahrrichtung liegenden Anschlagklappenfläche motorisch verfahrbar ist,
- einen Querschlittenrahmen, oberhalb dessen die Anschlagschiene befestigt ist, der eine Auflagefläche definiert die zumindest eine Querschlittenstrebe aufweist, die schräg oder senkrecht zur Verfahrbewegung der Anschlagklappe verläuft,
wobei der Sicherheitsrahmen mit dem Querschlitten durch Auflegen des Slcherheltsrahmens in einer vertikalen Richtung auf den Querschlittenrahmen und formschlüssiges Sichern gegen eine horizontale Bewegung des Sicherheitsrahmens in Bezug auf den Querschlittenrahmen verbindbar ist und der Sicherheitsrahmen in montierter Position zumindest in dem von der Anschlagklappe entlang ihres Verfahrwegs oberhalb von der Querschlittenstrebe legende Bereich eine Sperrfläche aufweist,
**dadurch gekennzeichnet dass**, der Sicherheitsrahmen dazu verwendet wird um zu verhindern, dass ein Benutzer durch diesen Bereich hindurchgreift.

15. Verwendung nach Anspruch 14,
**dadurch gekennzeichnet, dass** der Sicherheitsrahmen nach einem der vorhergehenden Ansprüche 2-9 fortgebildet ist und/oder dass der Sicherheitsrahnmen eine Längsstrebe aufweist, welche die Sicherheitsfläche umfasst, und zwei hierzu senkrecht stehende Querstreben, welche jeweils als U-Profil ausgebildet sind, dessen Schenkel in Betriebsstellung nach unten weisen und an ihrem Ende eine jeweils zum anderen Schenkel weisende Leiste aufweisen, die so ausgebildet ist, dass sie jeweils eine Querschlittenstrebe an ihrer Unterseite teilweise umgreift, wobei sich die Querstreben zu beiden Seiten der Längsstrebe erstrecken und vorzugsweise der Verbindungspunkt zwischen den Querstreben und der Längsstrebe solcherart liegt, dass die Oberseite der Längsstrebe im Bereich des Verfahrwegs einer Längsanschlagklappe liegt, wenn der Sicherheitsrahmen auf dem Querschlitten angeordnet ist.

## Claims

1. A transverse carriage for a sliding table saw, comprising
- a crosscut fence (50) which extends in a displacement direction and along which at least one flip stop (52, 63) having a flip stop face perpendicular to the displacement direction can be motorically driven,
- a transverse carriage frame (40), above which the crosscut fence is fixed, and which defines a support surface having at least one transverse carriage bar (43 44) running at an angle or perpendicularly to the displacement direction of the flip stop,
**characterised by** a safety frame (81, 62, 63) which is disposed on the transverse carriage frame and which has a blocking surface (63), at least in the region lying above the transverse carriage bar along the displacement path of the flip stop, which prevents a user from reaching through said region.

2. The transverse carriage according to claim 1,
**characterised in that** the safety frame can be releasably connected to the transverse carriage, in particular by placing the safety frame in a vertical direction onto the transverse carriage and securing the safety frame by positive engagement against any horizontal movement relative to the transverse carriage frame.

3. The transverse carriage according to claim 1 or 2,
in which the crosscut fence can be releasably connected to the transverse carriage frame, and the crosscut fence
- can be attached in a first position to the transverse carriage, in which position a front crosscut fence surface faces the support surface and serves as a contact surface for a workpiece, and
- can be attached in a second position to the transverse carriage frame, in which position a rear crosscut fence surface faces the support surface and serves as a contact surface for a workpiece,
**characterised in that** the safety frame can be releasably connected to the transverse carriage and
- can be attached to the transverse carriage in a first position in which the blocking surface is disposed in the region in front of the front crosscut fence surface and prevents a user from reaching through said region, and
- can be attached to the transverse carriage frame in a second position in which the blocking surface is disposed in the region behind the rear crosscut fence surface and prevents a user from reaching through said region

4. The transverse carriage according to any one of the preceding claims,
**characterised in that** the safety frame includes a longitudinal bar which surrounds the safety surface, and at least one crossbar disposed at an angle or perpendicular thereto and which is secured by positive engagement in at least one horizontal direction to a respective transverse carriage bar of the transverse carriage frame,

5. The transverse carriage according to the preceding claim,
**characterised in that** crossbar is embodied as a U-shaped profile, the legs of which point downwards in the operation position and grip a transverse carriage bar of the transverse carriage frame on both sides.

6. The transverse carriage according to any one of the two preceding claims and claim 3,
**characterised in that** the crossbar is secured in both the first and the second positions of the safety frame by positive engagement in at least one horizontal direction to the transverse carriage bar of the transverse carriage frame.

7. The transverse carriage according to any one of the preceding claims,
**characterised in that** the crossbar is embodied as a U-shaped profile, the legs of which point downwards when in the operating position and have at their ends a ledge which extends towards the respective other leg, said ledge being embodied in such a way that it partially grips the transverse carriage bar on the underside thereof.

8. The transverse carriage according to the preceding claim,
**characterised in that** there is an open region between the ledges extending towards the respective other leg, the clear distance between the two ledges being equal to the width of the transverse carriage bar.

9. The transverse carriage according to any one of the preceding claims,
**characterised in that** the safety frame includes a longitudinal bar which includes the safety surface and two crossbars at an angle or perpendicular thereto, of which at least one and preferably both is/are secured by positive engagement in at least one horizontal direction to the transverse carriage bar of the transverse carnage frame.

10. The transverse carriage according to any one of the preceding claims,
**characterised by** a sensor, in particular a mechanical feeler, which detects the presence of the blocking surface in the correct mounting position and which has an interface for transmitting the sensor data to a machine controller for the sliding table saw.

11. The transverse carriage according to the preceding claim,
**characterised by** eine machine controller which
- is coupled to the sensor and to a user interface,
- controls the motion of the flip stops and
- is embodied such that the flip stops can only be moved by continuous manual actuation when the sensor does not detect the presence of the blocking surface or detects it in an incorrect mounting position.

12. The transverse carriage according to any one of the preceding claims,
**characterised in that** the flip stop can be moved in such a way that its lower edge can be raised, and further **characterised by** an actuator which can raise the lower edge of the flip stop by a defined amount, and by a flip stop controller which controls the actuator such that the lower edge of the flip stop is raised before the flip stop is moved along the crosscut fence.

13. The transverse carriage according to any one of the preceding claims,
**characterised in that** the flip stop can be moved in such a way that its lower edge can be raised and that the lower edge of the flip stop has an chamfered edge which causes the lower edge of the flip stop to lift when it contacts an obstacle in the region of the lower edge.

14. Use of a safety frame for a transverse carriage of a sliding table saw, said transverse carriage comprising:
- a crosscut fence which extends in a displacement direction and along which at least one flip stop having a flip stop face perpendicular to the displacement direction can be motorically driven,
- a transverse carriage frame, above which the crosscut fence is fixed, and which defines a support surface having at least one transverse carriage bar running at an angle or perpendicularly to the displacement direction of the flip stop,
wherein the safety frame can be connected to the transverse carriage by laying the safety frame in a vertical direction onto the transverse carriage frame and by securing the safety frame by positive engagement against horizontal movement relative to the transverse carriage frame, and the safety frame in the mounted position has a blocking surface at least in the region lying above the transverse carriage bar along the displacement path of the flip stop,
**characterised in that** the safety frame is used to prevent a user from reaching through said region.

15. The use according to claim 14,
**characterised in that** the safety frame according to any one of the preceding claims 2 to 9 is developed and/or that the safety frame has a longitudinal bar, which surrounds the safety surface, and two crossbars at an angle or perpendicular thereto which are embodied as U-shaped profiles, the legs of which point downwards when in the operating position and have at their ends a ledge which extends towards the respective other leg, said ledge being embodied in such a way that it partially grips a transverse carriage bar on the underside thereof, wherein the crossbars extend on either side of the longitudinal bar and the connection point between the crossbars and the longitudinal bar is preferably in such a position that the top side of the longitudinal bar is in the region of the path of travel of a longitudinal flip stop when the safety frame is disposed on the transverse carriage.

## Revendications

1. Coulisseau transversal pour une scie circulaire à format, comportant
- un rail de butée (50) s'étendant dans la direction de déplacement, le long duquel au moins un clapet de butée (52, 53) présentant une surface perpendiculaire par rapport à la direction de déplacement peut être déplacé de manière motorisée,
- un cadre de coulisseau transversal (40), au-dessus duquel le rail de butée est fixé, lequel définit une surface de butée présentant au moins un montant de coulisseau transversal (43, 44), qui s'étend en biais ou de manière perpendiculaire par rapport au déplacement du clapet de butée,
**caractérisé par** un cadre de sécurité (61, 62, 63) qui est disposé sur le cadre du coulisseau transversal et qui présente au moins dans la zone se situant au-dessus du montant du coulisseau transversal le long du parcours de déplacement du clapet de butée une surface de blocage (63), qui empêche qu'un utilisateur ne traverse ladite zone.

2. Coulisseau transversal selon la revendication 1,
**caractérisé en ce que** le cadre de sécurité peut être assemblé de manière amovible au coulisseau transversal, en particulier en posant le cadre de sécurité dans une direction verticale sur le cadre du coulisseau transversal et en bloquant par complémentarité de forme tout mouvement horizontal du cadre de sécurité par rapport au cadre du coulisseau transversal.

3. Coulisseau transversal selon la revendication 1 ou 2,
dans le cadre duquel le rail de butée peut être relié de manière amovible au cadre du coulisseau transversal et le rail de butée
- peut être fixé dans une première position au niveau du cadre du coulisseau transversal, dans laquelle une surface avant du rail de butée est dirigée en direction de la surface d'appui et sert de surface d'appui pour une pièce à usiner, et
- peut être fixé dans une deuxième position au niveau du cadre du coulisseau transversal, dans laquelle une surface arrière du rail de butée est dirigée en direction de la surface d'appui et sert de surface d'appui pour une pièce à usiner,
**caractérisé en ce que** le cadre de sécurité peut être relié de manière amovible au cadre du coulisseau transversal et
- peut être fixé dans une troisième position au niveau du cadre de coulisseau transversal, dans laquelle la surface de blocage est disposée dans la zone de la surface avant du rail de butée et empêche qu'un utilisateur ne traverse ladite zone, et
- peut être fixé dans une deuxième position au niveau du cadre du coulisseau transversal, dans laquelle la surface de blocage est disposée dans la zone avant la surface arrière du rail de butée, et empêche qu'un utilisateur ne traverse ladite zone.

4. Coulisseau transversal selon l'une quelconque des revendications précédentes,
**caractérisé en ce que** le cadre de sécurité présente un montant longitudinal, lequel comporte la surface de sécurité, ainsi qu'au moins un montant transversal oblique ou perpendiculaire par rapport à la surface de sécurité, lequel est fixé dans au moins une direction horizontale par complémentarité de forme au niveau de respectivement un montant de coulisseau transversal du cadre du coulisseau transversal.

5. Coulisseau transversal selon l'une quelconque des revendications précédentes,
**caractérisé en ce que** le montant transversal est réalisé comme un profilé en U, dont les branches sont dirigées vers le bas en position de fonctionnement et entourent des deux côtés un montant de coulisseau transversal du cadre du coulisseau transversal.

6. Coulisseau transversal selon l'une quelconque des deux revendications précédentes et selon la revendication 3.
**caractérisé en ce que** le montant transversal est fixé aussi bien dans la première que dans la deuxième position du cadre de sécurité, dans au moins une direction horizontale par complémentarité de forme au niveau du montant de coulisseau transversal du cadre du coulisseau transversal.

7. Coulisseau transversal selon l'une quelconque des revendications précédentes,
**caractérisé en ce que** le montant transversal est réalisé comme un profilé en U, dont les branches sont dirigées vers le bas en position de fonctionnement et présentent au niveau de leur extrémité une baguette respective dirigée en direction de l'autre branche, laquelle baguette est réalisée de telle manière qu'elle entoure en partie au niveau de son côté inférieur, le montant du coulisseau transversal.

8. Coulisseau transversal selon la revendication précédente,
**caractérisé en ce qu'**est présente entre les baguettes dirigées respectivement en direction de l'autre branche, une zone ouverte, dont la dimension intérieure entre les deux baguettes correspond à la largeur du montant du coulisseau transversal.

9. Coulisseau transversal selon l'une quelconque des revendications précédentes,
**caractérisé en ce que** le cadre de sécurité présente un montant longitudinal, qui comporte la surface de sécurité, ainsi que deux montants transversaux se trouvant en biais ou de manière perpendiculaire par rapport à la surface de sécurité, parmi lesquels au moins un montant de préférence les deux montants sont fixés dans au moins une direction horizontale, par complémentarité de forme au niveau du montant de coulisseau transversal du cadre du coulisseau transversal.

10. Coulisseau transversal selon l'une quelconque des revendications précédentes,
**caractérisé par** un capteur, en particulier un palpeur mécanique, qui détecte la présence de la surface de blocage dans la position de montage correcte et qui présente une interface servant à transmettre les données du capteur à un dispositif de commande machine de la scie circulaire à format.

11. Coulisseau transversal selon la revendication précédente,
**caractérisé par** un dispositif de commande machine, qui
- est couplé au capteur et à une interface utilisateur.
- commande le déplacement des clapets de butée et
- est réalisé de telle manière que les clapets de butée ne peuvent être déplacés que par un actionnement manuel prolongé, si le capteur ne détecte pas la présence de la surface de blocage ou qu'il la détecte dans une mauvaise position de montage.

12. Coulisseau transversal selon l'une quelconque des revendications précédentes,
**caractérisé en ce que** le clapet de butée peut être déplacé de telle manière que son arête inférieure peut être soulevée, **caractérisé en outre par** un actionneur, qui peut soulever l'arête inférieure du clapet de butée d'une mesure définie, et **caractérisé par** un dispositif de commande des clapets de butée, lequel commande l'actionneur de telle manière que l'arête inférieure du clapet de butée est soulevée avant un déplacement du clapet de butée le long du rail de butée.

13. Coulisseau transversal selon l'une quelconque des revendications précédentes,
**caractérisé en ce que** le clapet de butée peut être déplacé de telle manière que son arête inférieure peut être soulevée, et **en ce que** l'arête inférieure des clapets de butée présente un chanfrein d'arrêt, qui provoque une élévation de l'arête inférieure du clapet de butée, lorsque ce dernier bute contre un obstacle dans la zone de l'arête inférieure.

14. Utilisation d'un cadre de sécurité pour un coulisseau transversal d'une scie circulaire à format, comportant :
- un rail de butée s'étendant dans une direction de déplacement, le long duquel au moins un clapet de butée présentant une surface perpendiculaire à la direction de déplacement peut être déplacé de manière motorisée,
- un cadre de coulisseau transversal, au-dessus duquel le rail de butée est fixé, qui définit la surface d'appui qui présente au moins un montant de coulisseau transversal, qui s'étend en biais ou de manière perpendiculaire par rapport au mouvement de déplacement du clapet de butée,
sachant que le cadre de sécurité peut être relié au coulisseau transversal en posant le cadre de sécurité dans une direction verticale sur le cadre du coulisseau transversal et en bloquant par complémentarité de forme tout mouvement vertical du cadre de sécurité par rapport au cadre du coulisseau transversal et sachant que le cadre de sécurité présente en position montée, au moins dans la zone se situant au-dessus du montant du coulisseau transversal le long du trajet de déplacement du clapet de butée, une surface de blocage,
**caractérisée en ce que** le cadre de sécurité est utilisé pour empêcher qu'un utilisateur ne traverse ladite zone.

15. Utilisation selon la revendication 14,
**caractérisée en ce que** le cadre de sécurité est perfectionné selon l'une quelconque des revendications 2 à 9, et/ou **en ce que** le cadre de sécurité présente un montant longitudinal, qui comporte la surface de sécurité, ainsi que deux montants transversaux perpendiculaires par rapport à la surface de sécurité, lesquels sont réalisés comme un profilé en U dont les branches sont dirigées vers le bas en position de fonctionnement et présentent au niveau de leur extrémité une baguette dirigée respectivement vers l'autre branche, laquelle baguette est réalisée de telle manière qu'elle entoure partiellement respectivement un montant du coulisseau transversal au niveau de son côté inférieur, sachant que les montants transversaux s'étendent des deux côtés du montant longitudinal et que de préférence le point d'assemblage entre les montants transversaux et le montant longitudinal est situé de telle manière que le côté supérieur du montant longitudinal se trouve dans la zone du trajet de déplacement du clapet de butée longitudinal, lorsque le cadre de sécurité est disposé sur le coulisseau transversal.
